(19)

Europäisches
Patentamt
European
Patent Office
Office européen
des brevets

(11) **EP 2 418 805 A1**

(12) **EUROPEAN PATENT APPLICATION**
published in accordance with Art. 153(4) EPC

(43) Date of publication:
**15.02.2012 Bulletin 2012/07**

(51) Int Cl.:
***H04L 12/44*** *(2006.01)*

(21) Application number: **09842922.8**

(22) Date of filing: **07.04.2009**

(86) International application number:
**PCT/JP2009/001616**

(87) International publication number:
**WO 2010/116410 (14.10.2010 Gazette 2010/41)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicant: **Mitsubishi Electric Corporation Tokyo 100-8310 (JP)**

(72) Inventors:
• **NOSE, Hideki**
**Tokyo 100-8310 (JP)**

• **MIE, Kaori**
**Tokyo 100-8310 (JP)**

(74) Representative: **Pfenning, Meinig & Partner GbR Patent- und Rechtsanwälte Theresienhöhe 13 80339 München (DE)**

(54) **OPTICAL SUBSCRIBER TERMINAL DEVICE, PON SYSTEM, AND ABNORMALITY DETECTION METHOD**

(57)     An ONU 1 that receives a discovery gate transmitted by an OLT in a predetermined cycle, returns a response signal in response to the discovery gate, and receives a unicast frame transmitted to the ONU 1 by the OLT having received the response signal, comprising: a received frame detecting unit 4 that detects whether a signal received from the OLT is a discovery gate or a unicast frame; and an erroneous emission detecting unit 5 that detects an abnormal emission state, based on a result detected by the received frame detecting unit 4.

## FIG.1

**Description**

Field

The present invention relates to a Passive Optical Network (PON), which is a medium-shared communication system in which data is transferred while a plurality of residence-side devices share a medium. The present invention specifically relates to an optical subscriber terminating device, a PON system, and an abnormality detecting method with which it is possible to detect a failure occurring in the optical subscriber terminating device used in an Ethernet (a registered trademark) PON (EPON) where data is transferred while being in Ethernet (a registered trademark) frames.

Background

In recent years, the Internet is popularly used, and users are able to access and obtain various information provided at sites that are run in various places of the world. Along with this trend, broadband accesses such as ones through Asymmetric Digital Subscriber Lines (ADSLs) and Fiber To The Home (FTTH) including the PON are also getting popular. In particular, with regard to FTTH, the demand for Gigabit Ethernet (a registered trademark)-PON (GE-PON) is rapidly growing, and the communication speed thereof is expected to be even higher in the future. Highspeed PON systems such as 10GE-PON are getting more and more attention.

A conventional PON system includes, for example, an Optical Line Terminal (OLT) that is mainly installed in a telephone station or the like; a plurality of Optical Network Units (ONUs) that are mainly installed at residences; an optical coupler that branches an optical signal transmitted from the OLT and sends the branched signals to the ONUs, and also, converges optical signals transmitted from the ONUs and sends the converged optical signal to the OLT; and user terminals each of which is connected to a different one of the ONUs. Link-up processes realized by handshakes and bandwidth distributing and allocating processes are performed between the OLT and the ONUs.

In the PON system configured as described above, if, for example, a failure has occurred in the circuit of one of the ONUs so that the ONU goes into a constant light-emitting state (hereinafter, a "constant emission state"), timing control of the upstream communication is not properly exercised. As a result, all the ONUs become unable to perform communication, and ONU links are cut off. In that situation, it is necessary to identify the ONU having the failure and to isolate the identified ONU from the PON system, so as to secure a communication path in the upstream direction and to recover the communication. Examples of techniques for realizing this solution are disclosed in, for example, Patent Literature 1 and Patent Literature 2 listed below.

By using the technique disclosed in Patent Literature 1, it is possible to detect, not only slave stations that have gone into a constant emission state due to a failure in the circuit, but also slave stations having an abnormality in the light emission period thereof. Also, Patent Literature 2 discloses a circuit for detecting an abnormality that accidentally occurred in an upstream frame.

Citation List

Patent Literature

Patent Literature 1: Japanese Patent Application Laid-open No. 2007-318524
Patent Literature 2: Japanese Patent Application Laid-open No. 2007-158943

Summary

Technical Problem

According to the technique described in Patent Literature 1 listed above, however, it is necessary to additionally attach a photodiode to each of the ONUs, to be able to detect the light emitting state. For this reason, a problem arises where it is difficult to apply this technique to optical subscriber terminating devices, which are installed at residences and require low costs.

Further, the technique described in Patent Literature 2 is not applicable to the situation where the upstream communication is disabled by a continuous light-emission state of an ONU. Thus, a problem remains where it is not possible to apply the technique to continuous light-emission abnormalities.

In view of the circumstances described above, an object of the present invention is to obtain an optical subscriber terminating device, a PON system, and an abnormality detecting method with which it is possible to detect continuous light-emission abnormalities, while keeping the circuit to be added to general-purpose ONUs minimum.

Solution to Problem

In order to solve the above problem and in order to attain the above object, in an optical subscriber terminating device that receives a predetermined control signal transmitted by an optical subscriber terminal station device in a predetermined cycle, returns a response signal in response to the predetermined control signal, and receives a unicast frame transmitted to the optical subscriber terminating device by the optical subscriber terminal station device having received the response signal, the optical subscriber terminating device of the present invention, include: a received frame detecting unit that detects a type of signal received from the optical subscriber terminal station device; and an abnormal emission detecting unit that detects an abnormal emission state, based on a result detected by the received frame detecting unit.

Advantageous Effects of Invention

The optical subscriber terminating device, the PON system, and the abnormality detecting method according to an aspect of the present invention are obtained by adding the abnormal emission detecting unit to a general-purpose ONU, and the abnormal emission detecting unit is configured so as to determine that the ONU is in a continuous light-emission abnormal state in the situation where discovery gates have regularly been received, but no unicast frame has been received within the predetermined time period since the reception of a discovery gate. Thus, an advantageous effect is achieved where it is possible to detect continuous light-emission abnormalities, while keeping the circuit to be added to the general-purpose ONU minimum.

Brief Description of Drawings

FIG. 1 is a diagram of an exemplary functional configuration of an optical subscriber terminating device according to an aspect of the present invention.
FIG. 2 is a diagram of an exemplary configuration of a PON system.
FIG. 3 is a sequence chart of examples of link-up processes realized by handshakes of ONUs and a bandwidth distributing and allocating process.
FIG. 4 is a chart of an example of an operation sequence used when ONU link-up processes are performed again.
FIG. 5 is a sequence chart of an example of a method for controlling emission force-quit processes.
FIG. 6-1 is a flowchart of an example of a process to identify an ONU that is in a continuous light-emission abnormal state and an operation to eliminate a communication abnormality.
FIG. 6-2 is another flowchart of the example of the process to identify the ONU that is in the continuous light-emission abnormal state and the operation to eliminate the communication abnormality.

Reference Signs List

| | |
|---|---|
| 1, 1-1 to 1-5 | ONU |
| 2 | OPTICAL TRANSMITTING AND RECEIVING UNIT |
| 3 | OPTICAL INPUT DETECTING UNIT |
| 4 | RECEIVED FRAME DETECTING UNIT |
| 5 | ERRONEOUS EMISSION DETECTING UNIT |
| 6 | EMISSION FORCE-QUIT CONTROLLING UNIT |
| 7 | EMISSION FORCE-QUIT UNIT |
| 8 | LED CONTROLLING UNIT |
| 10 | DISCOVERY GATE |
| 11 to 13 | UNICAST FRAME |
| 14 | OPTICAL FIBER |
| 20 | OLT |
| 21 | OPTICAL COUPLER |
| 22-1 to 22-5 | USER TERMINAL |

Description of Embodiments

In the following sections, exemplary embodiments of an optical subscriber terminating device, a PON system, and an abnormality detecting method according to the present invention will be explained in detail, with reference to the accompanying drawings. The present invention is not limited by the exemplary embodiments.

Exemplary Embodiments

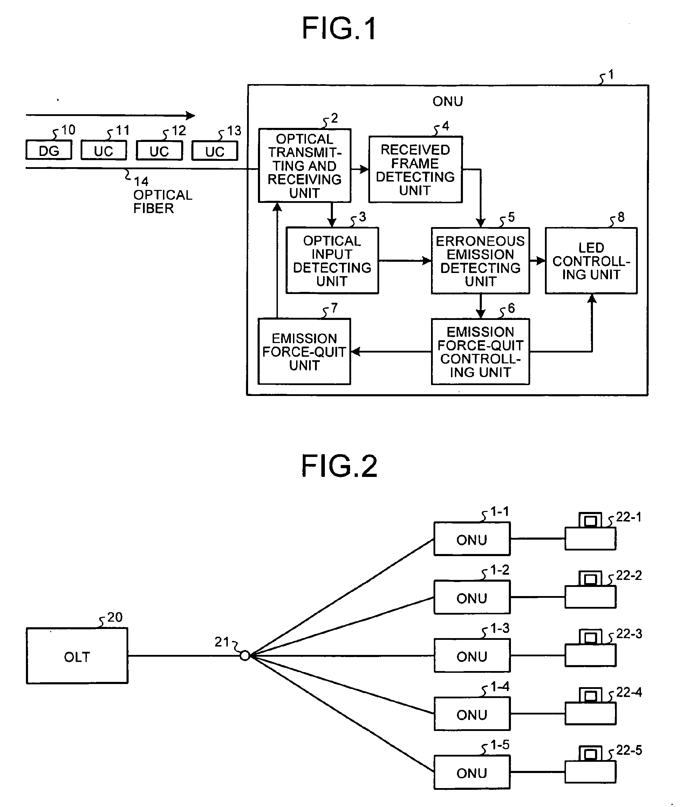

FIG. 1 is a diagram of an exemplary functional configuration of an optical subscriber terminating device (hereinafter, an "Optical Network Unit (ONU)") according to an aspect of the present invention. In FIG. 1, constituent elements relevant to the present invention are shown. An ONU 1 shown in FIG. 1 is based on a premise that the ONU 1 has principal functions of ONUs defined in the Institute of Electrical and Electronic Engineers (IEEE) Std 802.3-2005 or the IEEE 802.3av, which is in a process of standardization.

As shown in FIG. 1, the ONU 1 according to the present embodiment includes: an optical transmitting and receiving unit 2 that converts a received optical signal into an electric signal and converts an electric signal to be transmitted to an optical signal; an optical input detecting unit 3 that detects if optical signals are being received, based on whether each of the optical signals detected by the optical transmitting and receiving unit 2 has an output equal to or higher than a predetermined threshold; a received frame detecting unit 4 that detects a received frame; an erroneous light-emission (abnormal light-emission) detecting unit (hereinafter, "erroneous emission detecting unit") 5 that detects if the ONU is in an abnormal light-emission state (hereinafter, "abnormal emission state"); an emission force-quit controlling unit 6 that controls an emission force-quit process; an emission force-quit unit 7 that implements an emission force-quit instruction; and a light emitting diode (LED) controlling unit 8 that controls an LED. Further, the ONU 1 is connected to an optical fiber 14 and receives, for example, a discovery gate (DG) 10 and unicast frames (UC) 11-13 via the optical fiber 14.

FIG. 2 is a diagram of an exemplary configuration of a PON system according to the present embodiment. As shown in FIG. 2, the PON system according to the present embodiment includes: an OLT 20 that is mainly installed in a telephone station or the like; ONUs 1-1 to 1-5 that are mainly installed at residences; an optical coupler 21 that branches an optical signal transmitted from the OLT 20 and sends the branched signals to the ONUs 1-1 to 1-5, and also, converges optical signals transmitted from the ONUs 1-1 to 1-5 and sends the converged optical signal to the OLT 20; and user terminals 22-1 to 22-5 that are connected to the ONUs 1-1 to 1-5, respectively. Each of the ONUs 1-1 to 1-5 has the same configuration as that of the ONU 1 shown in FIG. 1. Although the number of ONUs is five in the example shown in FIG. 2, the number of ONUs is not limited to this example.

THE OLT 20 is connected to the optical coupler 21 via an optical fiber. Each of the ONUs 1-1 to 1-5 is connected to the optical coupler 21 via an optical fiber. Further, each of the ONUs 1-1 to 1-5 is connected to a corresponding one of the user terminals 22-1 to 22-5 via a cable.

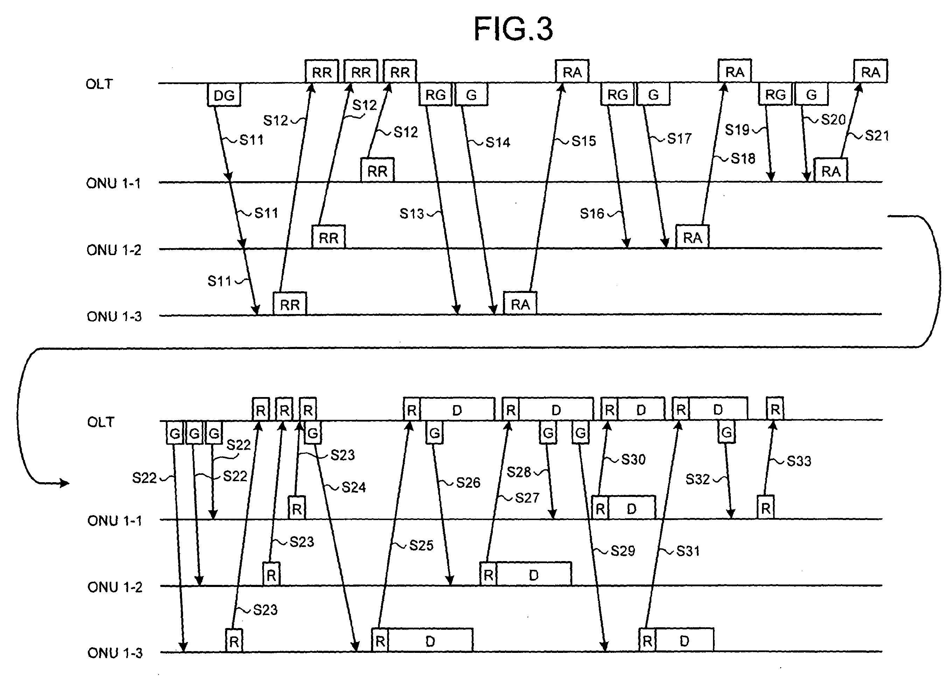

FIG. 3 is a sequence chart of examples of link-up processes realized by handshakes of the ONUs (hereinafter, the "ONU link-up processes") and a bandwidth distributing and allocating process that are performed in the PON system shown in FIG. 2. In FIG. 3, the number of ONUs connected to the OLT is three (i.e., the ONU-1 to ONU-3 shown in FIG. 3). The upper section of the drawing illustrates a discovery process in which the ONUs perform the link-up processes as defined in the IEEE Std 802.3-2005 and the IEEE 802.3av. The lower section of the drawing illustrates giving and receiving of grants and reports between the OLT and the ONUs for the purpose of allocating the bandwidth after the ONU link-up processes are completed.

The ONU link-up processes and the bandwidth distributing and allocating process will be explained, with reference to FIG. 3. First, the OLT 20 transmits, in the manner of a broadcast, a discovery gate (DG) to the ONUs 1-1 to 1-3, for the purpose of finding ONUs that have not completed a link-up process (step S11). In the present example, let us assume that the ONUs 1-1 to 1-3 have not completed the link-up processes. When having received the discovery gate from the OLT 20, each of the ONUs 1-1 to 1-3 transmits a Register Request (RR) for the purpose of requesting a link-up process (step S12).

When having received the register requests from the ONUs 1-1 to 1-3, the OLT 20 transmits a register (RG) including information required to subsequently perform the ONU link-up process, to the ONU 1-3 (step S13). After that, the OLT 20 transmits a grant (G) that defines transmission timing of frames to be transmitted by the ONU 1-3 (step S14).

After confirming that the frames of the register and the grant received from the OLT 20 have properly been received, the ONU 1-3 transmits a Register Acknowledge (RA) for the purpose of notifying that the register has properly been received, while using the transmission timing specified in the received grant (step S15). The link-up process for the ONU 1-3 has thus completed.

Subsequently, the processes at steps S16 through S18 and the processes at steps S19 through S21 are performed for the ONUs 1-1 and 1-2, respectively, in the same manner as at steps S13 through S15 for the ONU 1-3. The link-up processes for the ONUs 1-1 and 1-2 are thus completed. Because the OLT 20 performs the link-up process for each of the ONUs 1-1 to 1-3 independently, the transmission timing specified for each of the ONUs 1-1 to 1-3 is determined depending on a processing status of the OLT 20.

The OLT 20 starts the bandwidth allocating process and data transfer for the ONUs that have completed the ONU link-up processes, according to a Multi Point Control Protocol (MPCP). First, the OLT 20 calculates a transmission starting time of a report to be transmitted by each of the ONUs, generates a grant including the calculated transmission starting time for each of the ONUs, and sequentially transmits the generated grants to the corresponding one of the ONUs 1-3, 1-2, and 1-1 (step S22).

Each of the ONUs 1-1 to 1-3 transmits a report including a data transmission request amount to the OLT 20, according to the transmission starting time included in the received grant (step S23). When having received the reports from the ONUs 1-1 to 1-3, the OLT 20 calculates a data transmission starting time and a transmission permitted amount for the ONU 1-3, which is the first one to be permitted to transmit data, and the OLT 20 transmits a grant storing therein the data transmission starting time and the transmission permitted amount that are calculated, to the ONU 1-3 (step S24).

When having received the grant transmitted at step S24, the ONU 1-3 generates upstream data (D) based on the transmission permitted amount included in the received grant and transmits the generated upstream data (D) together with a report storing therein a transmission request amount for the next transmission, to the OLT 20 (step S25).

The OLT 20 receives the data from the ONU 1-3 and calculates, in parallel therewith, a data transmission starting time and a transmission permitted amount for the ONU 1-2, and transmits a grant storing therein the calculated result to the ONU 1-2 (step S26). When having received the grant transmitted at step S26, the ONU 1-2 generates upstream data (D) based on the transmission permitted amount included in the received grant and transmits the generated upstream data (D) together with a report storing therein a transmission request amount for the next transmission, to the OLT 20 (step S27).

The OLT 20 receives the data from the ONU 1-2 and calculates, in parallel therewith, a data transmission starting time and a transmission permitted amount for the ONU 1-1, and transmits a grant storing therein the calculated result to the ONU 1-1 (step S28). After transmitting the grant to the ONU 1-1, the OLT 20 calculates a transmission starting time and a transmission permitted amount for the second transmission of the ONU 1-3 and transmits a grant storing therein the calculation result, to the ONU 1-3 (step S29).

When having received the grant transmitted at step S28, the ONU 1-1 generates upstream data (D) based on the transmission permitted amount included in the received grant and transmits the generated upstream data (D) together with a report storing therein a transmission request amount for the next transmission, to the OLT 20 (step S30). Also, when having received the grant transmitted at step S29, the ONU 1-3 generates upstream data, based on the transmission permitted amount included in the received grant and transmits the generated upstream data together with a report storing therein a transmission request amount for the next transmission, to the OLT 20 (step S31).

After that, according to the data amount, a transmission of a grant and a transmission of a report and upstream data are performed in the same manner (steps S32 and S33). As explained above, the OLT 20 sequentially allocates the bandwidths to the ONUs 1-1 to 1-3 and receives the data from the ONUs.

If an abnormality has occurred in one or more of the ONUs 1-1 to 1-3 so that those ONUs go into a continuous light-emission state (hereinafter, "continuous emission state"), the communications from the ONUs 1-1 to 1-3 toward the OLT 20 (i.e., the communications in the upstream direction) all become impossible due to an interference among the optical signals. As a result, it becomes impossible to perform the ONU link-up processes realized by the handshakes and the bandwidth distributing and allocating process shown in FIG. 3. When the communications in the upstream direction became impossible in this manner, the link-up state of all the ONUs is cancelled, and the OLT 20 performs link-up processes again.

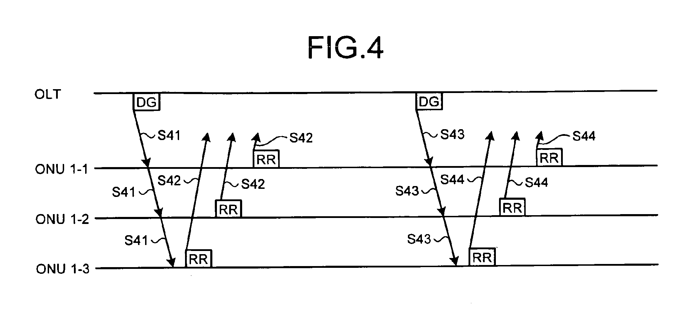

FIG. 4 is a chart of an example of an operation sequence used when the ONU link-up processes are performed again. When the communications in the upstream direction became impossible, the OLT 20 first transmits, as shown in FIG. 4, a discovery gate (DG) to the ONUs 1-1 to 1-3, for the purpose of performing the ONU link-up processes again (step S41).

When having received the discovery gate, each of the ONUs 1-1 to 1-3 transmits a register request to request a link-up process; however, when the one or more of the ONUs 1-1 to 1-3 are in an abnormal state and have gone into a continuous emission state where the communications are impossible, the OLT 20 is not able to receive the register requests transmitted from the ONUs 1-1 to 1-3 (step S42). To cope with this situation, the OLT 20 transmits a discovery gate again, based on a discovery cycle that is set in advance (step S43); however, the OLT 20 is still not able to receive the register requests transmitted from the ONUs 1-1 to 1-3 (step S44). After that, the OLT 20 keeps transmitting a discovery gate at a regular interval.

To avoid the situation where, as shown in FIG. 4, the OLT 20 keeps transmitting a discovery gate, it is important to identify the ONUs that have gone into the continuous emission state and are causing hindrances, as quickly as possible, to perform an emission force-quit process on those ONUs, and to ensure communication paths in the upstream direction. Further, it is desirable if each of the ONUs is configured so as to be able to detect when the ONU itself is in a continuous emission state and to automatically discontinue the force emission state. Further, generally speaking, because each of the ONUs is installed at a residence or the like of a subscriber, it is desirable to be able to perform the processes described above, with a minimum additional circuit to a general-purpose ONU.

To address these demands, the ONU 1 according to the present embodiment is provided with a continuous emission state detecting unit that detects whether the upstream line in the system of its own is in a continuous emission state. Also, according to the present embodiment, when the ONU 1 detects that a continuous emission state is present, the ONU 1 judges if the ONU 1 itself is the one being in a continuous emission state. When the ONU 1 has determined that it is the ONU 1 itself that is in a continuous emission state, the ONU 1 performs an emission force-quit process so as to ensure a communication path in the upstream direction.

Returning to the description of FIG. 4, for example, in the situation illustrated in FIG. 4, by monitoring whether each of the ONUs 1-1 to 1-3 is in a "state where it is not possible to receive any unicast frame for a predetermined period of time, although a discovery gate was received", it is possible to detect whether any of the ONUs 1-1 to 1-3 is in an abnormal emission state where the communications of the upstream signals are hindered.

In general-purpose ONUs, a circuit that detects whether a discovery gate has been received is already installed so as to perform the discovery process. Also, it is possible to judge whether no unicast frame has been received for the predetermined period of time, by using a means for performing regular receiving processes. For example, let us assume that, if no unicast frame has been received for the predetermined period of time, a judgment result shows "no unicast frame has been received". Each of the ONUs is able to judge whether an abnormality has occurred in the upstream communication by judging whether an upstream communication abnormality detection condition shown below in Expression (1) is satisfied.

$$\text{"Discovery gates have been received in a predetermined cycle" AND "No unicast frame has been received"} \quad (1)$$

In Expression (1) shown above, confirming that discovery gates have been received in the predetermined cycle corresponds to confirming that the downstream communication is normal. Also, confirming that no unicast frame has been received corresponds to confirming that the upstream communication is not normal.

To further simplify the circuit configuration, it is also possible to judge whether an abnormality has occurred in the upstream communication by using a communication abnormality detection condition shown below in Expression (2).

$$\text{Another upstream communication abnormality detection condition=}$$
$$\text{"The downstream signal optical input is normal" AND "No unicast frame has been received"} \quad (2)$$

It is possible to judge whether the downstream signal optical input is normal, by using a regular receiving function of the ONUs. When Expression (2) shown above is used, determining that the downstream signal optical input is normal corresponds to determining that the downstream communication is normal. It should be noted that, however, when Expression (2) shown above is used, it is not possible to distinguish the situation where discovery gates are not properly transmitted due to a failure of the OLT 20. Thus, it is preferable to use the condition in Expression (1) as long as the circuit scale of the ONUs is within a restriction range.

With the arrangement described above, it is possible to determine that an abnormality has occurred in the upstream communication; however, it is still not possible to identify which ONU is in an abnormal state. In the present embodiment, for the purpose of, in the following stage, identifying the ONU that is in a continuous light-emission abnormal state (hereinafter, a "continuous emission abnormal state") and realizing the emission force-quit process on the identified ONU, each of the ONUs exercises emission force-quit control and each of the ONUs monitors whether the abnormal state in the upstream communication is cancelled by the control. In this situation, if the ONUs performed the emission force-quit processes at the same time, it would not be possible to determine which ONU's emission force-quit control has contributed to the recovery of the upstream communication. Thus, it is necessary to ensure that the ONUs do not perform the emission force-quit processes at the same time.

To ensure that the ONUs do not perform the emission force-quit processes at the same time, it is necessary to, for example, calculate an emission-quit starting time by using a number unique to each of the ONUs such as an identifier so that the emission-quit starting times do not overlap one another among the ONUs. As a specific embodiment example, it is possible to use a Logical Link Identification (LLID) provided by the OLT for each of the ONUs through an auto discovery process.

The Logical Link Identification is a number that is unique to each ONU and is assigned to the ONU by the OLT when the ONU link-up process is performed. Each of the ONUs multiplies an emission force-quit time period that is set in advance by a predetermined value calculated based on the LLID assigned to the ONU, so as to obtain a multiplied time period. Further, each of the ONUs sets a starting point at a time (i.e., a continuous emission abnormal state detection time) at which an abnormality in the upstream communication is detected based on Expression (1) or (2) shown above and determines a time at which the multiplied time period has elapsed since the starting point as the emission force-quit starting time. With this arrangement, the ONUs are able to perform the emission force-quit processes without overlapping one another.

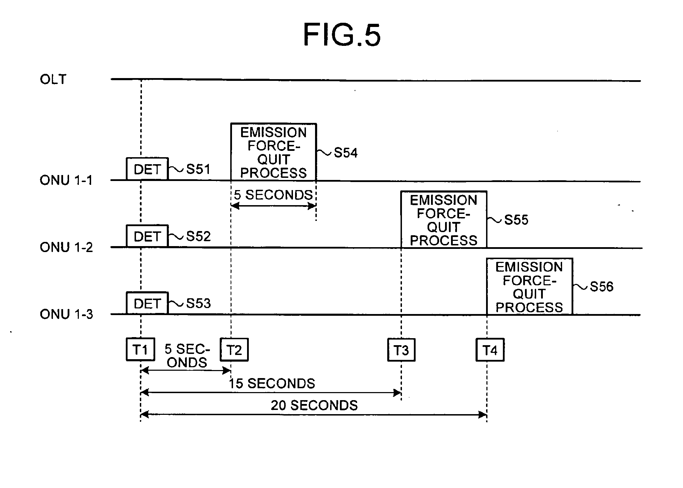

FIG. 5 is a sequence chart of an example of a method for controlling the emission force-quit processes according to the present embodiment. In the present example also, it is assumed that three ONUs (i.e., the ONUs 1-1 to 1-3) are connected, like in the examples shown in FIGs. 3 and 4. Also, as for the LLIDs, it is assumed that LLID #0 (the value of the LLID number is "0") is assigned to the ONU 1-1, LLID #2 (the value of the LLID number is "2") is assigned to the ONU 1-2, and LLID #3 (the value of the LLID number is "3") is assigned to the ONU 1-3. It is also assumed that the transmission cycle of the discovery gates transmitted by the OLT 20 is 1 second and that the emission force-quit time period of each of the ONUs is 5 seconds. The transmission cycle of the discovery gates and the emission force-quit time period mentioned here are only examples. The present invention is not limited to these examples, and the time periods may be set to any number of seconds.

First, based on the upstream communication abnormality detecting condition defined in Expression (1) or (2) shown above, each of the ONUs 1-1 to 1-3 detects (DET) that an abnormality has occurred in the upstream communication i.e., that a continuous emission abnormal state is present (steps S51, S52, and S53). In this situation, the difference in the timing with which the continuous emission abnormal state is detected among the ONUs 1-1 to 1-3 (i.e., the time periods between the occurrence of the abnormality and the detection) depends on the length of the optical fiber being connected and an operation clock deviation of each of the ONUs; however, generally speaking, the difference is 1 millisecond or shorter. Thus, in the present example, the difference is considered to be negligible in controlling the emission force-quit processes. Consequently, it is assumed that all of the ONUs 1-1 to 1-3 detect the continuous emission abnormal state at a time T1.

When having detected the continuous emission abnormal state, each of the ONUs 1-1 to 1-3 calculates an ONU emission force-quit starting time T2 at which the emission force-quit process is to be started, by using Expression (3) shown below.

```
The ONU emission force-quit starting time T2
=T1+(LLID number+1)*emission force-quit time period   (3)
```

For example, for the ONU 1-1, T2 is calculated as T2=T1+1*5 by using Expression (3) shown above. Thus, the ONU 1-1 forcibly stops the light emission (force-quits the light emission) for 5 seconds from the time T2, which is 5 seconds later than T1 (step S54). Similarly, the ONU 1-2 performs the emission force-quit process for 5 seconds from a time T3, which is 15 seconds later than T1 (step S55). The ONU 1-3 performs the emission force-quit process for 5 seconds from a time T4, which is 20 seconds later than T1 (step S56). As a result, the times at which the ONUs 1-1 to 1-3 perform the emission force-quit processes do not overlap one another.

According to the present embodiment, to ensure that the ONUs perform the emission force-quit processes without overlapping one another, the emission force-quit starting times are determined by using the LLIDs; however, it is also acceptable to determine the emission force-quit starting times based on any other information unique to each of the ONUs. For example, it is also acceptable to calculate the emission force-quit starting times by using Media Access Control (MAC) addresses of the ONUs.

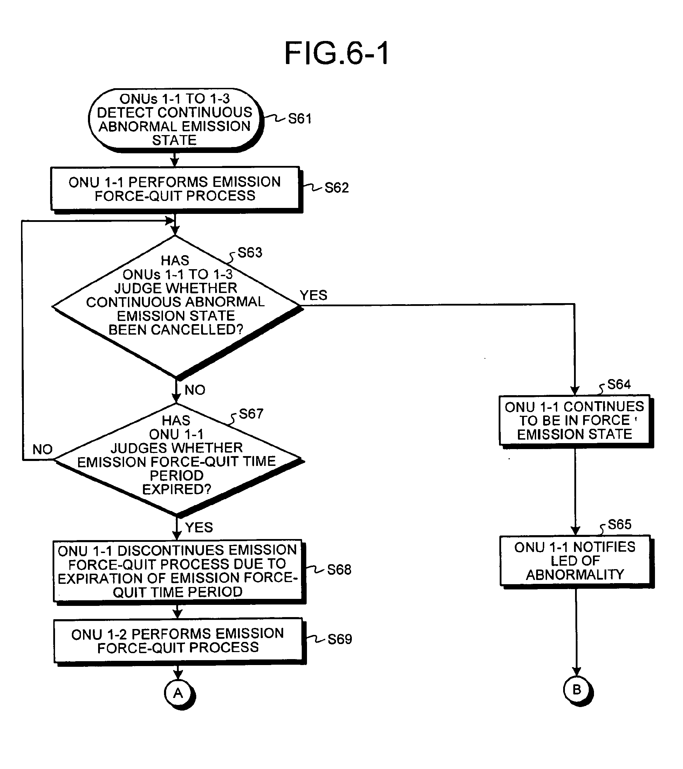

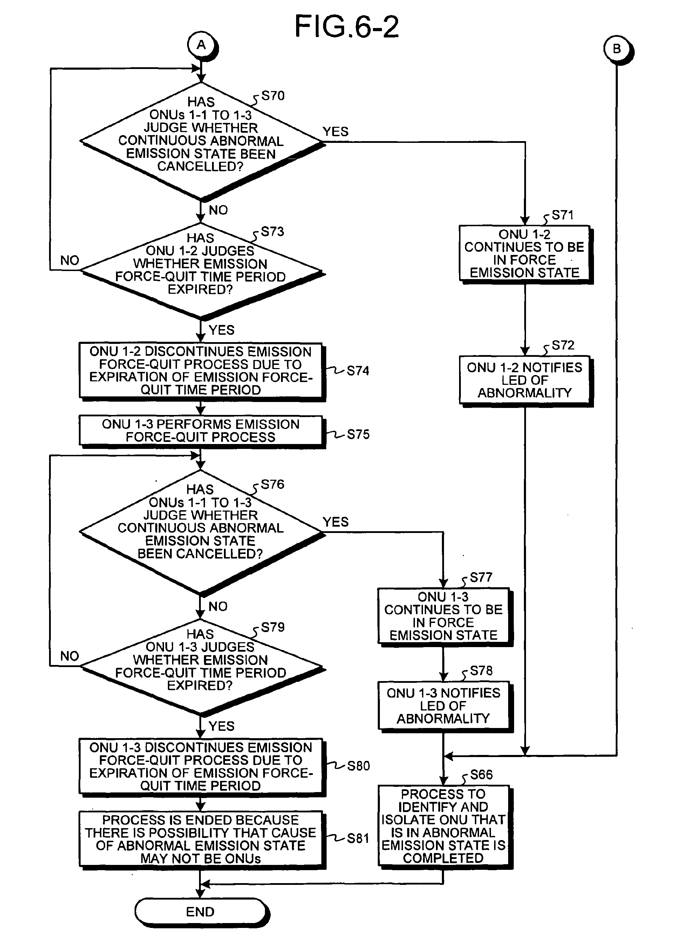

Next, an operation that is performed after the emission force-quit processes are performed in the manner described above, so as to identify the ONU that is in the continuous emission abnormal state based on the result of the emission force-quit processes and to cancel the communication abnormal state in the upstream direction will be explained. FIGs. 6-1 and 6-2 are flowcharts of an example of the process to identify the ONU that is in a continuous emission abnormal state and the communication abnormality eliminating operation.

In the following sections, an example in which the number of ONUs is three (i.e., the ONUs 1-1 to 1-3), like in the examples shown in FIGs. 3, 4, and 5, will be explained. Further, it is assumed that the order in which the ONUs 1-1 to 1-3 perform the emission force-quit processes is determined based on the unique values respectively corresponding to the ONUs, as explained with reference to the example shown in FIG. 5. In the example shown in FIGs. 6-1 and 6-2, it is assumed that, after the continuous abnormal state is detected, the ONU 1-1 first performs the emission force-quit process, and subsequently, the ONU 1-2 and ONU 1-3 perform the emission force-quit processes in the state order, like in the example shown in FIG. 5.

First, each of the ONUs 1-1 to 1-3 detects the continuous emission abnormal state (step S61). After having detected the continuous emission abnormal state, each of the ONUs calculates the emission force-quit starting time as explained above. First, the ONU 1-1 performs the emission force-quit process (step S62). After the ONU 1-1 performs the emission force-quit process, the ONUs 1-1 to 1-3 judge whether the continuous emission abnormal state has been cancelled (step S63). More specifically, for example, when it has become possible to receive a unicast frame within a predetermined time period since a reception of a discovery gate, it is determined that the continuous emission abnormal state has been cancelled.

When the ONUs 1-1 to 1-3 determine that the continuous emission abnormal state has been cancelled (step S63: Yes), the ONUs 1-1 to 1-3 determine that the ONU 1-1 is the ONU that caused the continuous emission abnormal state and further keep the ONU 1-1 in the force emission state so as to secure an upstream communication path (step S64). More specifically, when it is determined that the continuous emission abnormal state has been cancelled, the ONU 1-1 continues to be in the force emission state, and each of the ONUs 1-2 and 1-3 does not perform the emission force-quit process even if the emission force-quit starting time calculated for itself has arrived. Further, the ONU 1-1 illuminates a Light Emitting Diode (LED) thereof to notify that the ONU 1-1 itself is an abnormal ONU (step S65). It is determined that the process to identify and isolate the ONU that is in the abnormal emission state has been completed, and the process is ended (step S66).

The LED is illuminated when each of the ONUs is provided with the function to illuminate the LED; however, if the ONUs were not provided with the function, the LED illumination process would not necessarily have to be performed. Further, it is possible to use any method to illuminate the LED. The method for illuminating the LED for the purpose of having the abnormality recognized is determined in advance, so that the LED can be illuminated by using the method.

On the contrary, if the ONUs 1-1 to 1-3 determine, at step S63, that the continuous emission abnormal state has not been cancelled (step S63: No), the ONU 1-1 checks to see if the emission force-quit time period has expired (step S67). If the ONU 1-1 determines that the emission force-quit time period has expired (step S67: Yes), the ONU 1-1 discontinues the emission force-quit process (step S68). On the contrary, if the ONU 1-1 determines that the emission force-quit time period has not expired (step S67: No), the ONU 1-1 returns to step S63. At step S67, the ONUs 1-2 and 1-3 do not perform the process, but stand by while the process at step S67 is being performed. When the ONU 1-1 performs the process at step S63, the ONUs 1-2 and 1-3 also perform the process at step S63 at the same time.

When the ONU 1-1 discontinues the emission force-quit process at step S68, the ONU 1-2 performs the emission force-quit process based on the emission force-quit starting time of its own, as an emission force-quit process to follow (step S69). Further, in the same manner as at step S63, the ONUs 1-1 to 1-3 judge whether the continuous emission abnormal state has been cancelled (step S70).

When the ONUs 1-1 to 1-3 determine that the continuous emission abnormal state has been cancelled (step S70: Yes), the ONUs 1-1 to 1-3 determine that the ONU 1-2 is the ONU that caused the continuous emission abnormal state and further keep the ONU 1-2 in the force emission state so as to secure an upstream communication path (step S71). Further, the ONU 1-2 illuminates an LED to notify that the ONU 1-2 itself is an abnormal ONU (step S72). It is determined that the process to identify and isolate the ONU that is in the abnormal emission state has been completed, and the process is ended (step S66).

On the contrary, if the ONUs 1-1 to 1-3 determine that the continuous emission abnormal state has not been cancelled (step S70: No), the ONU 1-2 checks to see if the emission force-quit time period has expired (step S73). If the ONU 1-2 determines that the emission force-quit time period has expired (step S73: Yes), the ONU 1-2 discontinues the emission force-quit process (step S74). On the contrary, if the ONU 1-2 determines that the emission force-quit time period has not expired (step S73: No), the ONU 1-2 returns to step S70. At step S73, the ONUs 1-1 and 1-3 do not perform the process, but stand by while the process at step S73 is being performed. When the ONU 1-2 performs the process at step S70, the ONUs 1-1 and 1-3 also perform the process at step S73 at the same time.

When the ONU 1-2 discontinues the emission force-quit process at step S74, the ONU 1-3 performs the emission force-quit process based on the emission force-quit starting time of its own, as an emission force-quit process to follow (step S75). Further, in the same manner as at step S63, the ONUs 1-1 to 1-3 judge whether the continuous emission abnormal state has been cancelled (step S76). When the ONUs 1-1 to 1-3 determine that the continuous emission abnormal state has been cancelled (step S76: Yes), the ONUs 1-1 to 1-3 determine that the ONU 1-3 is the ONU that caused the continuous emission abnormal state and further keep the ONU 1-3 in the force emission state so as to secure an upstream communication path (step S77). Further, the ONU 1-3 illuminates an LED to notify that the ONU 1-3 itself is an abnormal ONU (step S78). It is determined that the process to identify and isolate the ONU that is in the abnormal emission state has been completed, and the process is ended (step S66).

On the contrary, if the ONUs 1-1 to 1-3 determine that the continuous emission abnormal state has not been cancelled (step S76: No), the ONU 1-3 checks to see if the emission force-quit time period has expired (step S79). If the ONU 1-3 determines that the emission force-quit time period has expired (step S79: Yes), the ONU 1-3 discontinues the emission force-quit process (step S80). Because there is a possibility that the cause of the abnormal emission state may not be the ONUs, the process is ended without identifying the ONU causing the abnormality (step S81). In this situation, to notify the user that no ONU has been identified as the cause of the abnormality, a notifying process may be performed through an illumination of an LED or by using other means.

On the contrary, if the ONU 1-3 determines, at step S79, that the emission force-quit time period has not expired (step S79: No), the ONU 1-3 returns to step S76. At step S79, the ONUs 1-1 and 1-2 do not perform the process, but stand by while the process at step S79 is being performed. When the ONU 1-3 performs the process at step S76, the ONUs 1-1 and 1-2 also perform the process at step S76 at the same time.

As a result, of the processes described above, it is possible to identify the ONU that is in the continuous emission abnormal state and to recover the upstream communication by causing the identified ONU to perform the emission force-quit process. The operation was explained above, with reference to FIGs. 3, 4, 5, 6-1, and 6-2, while using the example in which the number of ONUs is three. It should be noted, however, that there is no limitation to the number of ONUs. The operation should be performed in the same manner as many times as the number of ONUs.

Next, returning to the description of FIG. 1, a procedure in the operation related to the emission force-quit process performed by the ONU 1 according to the present embodiment will be explained. In FIG. 1, only the constituent elements that are related to the emission force-quit process and the connection relationship related to the process are shown. Thus, other constituent elements used for performing regular communication are not shown in the drawing. First, the optical transmitting and receiving unit 2 receives, as optical signals, the discovery gate 10 transmitted from the OLT 20 via the optical fiber 14 and the unicast frames 11 to 13 transmitted by the OLT 20 to the ONUs. The optical transmitting and receiving unit 2 converts the received optical signals into the electric signals and sends the electric signals to the received frame detecting unit 4. Also, when data is to be transmitted, the optical transmitting and receiving unit 2 converts transmission data, which is an electric signal, into an optical signal and outputs the optical signal to the optical fiber 14.

The optical input detecting unit 3 judges whether the optical signals transmitted from the OLT 20 are received at a signal level equal to or higher than a predetermined level (i.e., an optical input level that allows the optical transmitting and receiving unit 2 to properly reconstruct the optical signals into electric signals), that is to say, judges whether the optical signals are received at a normal optical input level. The optical input detecting unit 3 then notifies the erroneous emission detecting unit 5 of the judgment result.

Based on each of the electric signals output from the optical transmitting and receiving unit 2, the received frame detecting unit 4 judges whether the signal is the discovery gate 10 transmitted from the OLT 20 or the unicast frames 11 to 13 transmitted from the OLT 20 to the ONUs and notifies the erroneous emission detecting unit 5 of the judgment result.

When being notified by the optical input detecting unit 3 that the signal is received at a normal optical input level, the erroneous emission detecting unit 5 judges whether discovery gates 10 are received in the predetermined cycle, based on the notification from the received frame detecting unit 4 indicating that a discovery gate 10 is received. Further, if the erroneous emission detecting unit 5 determines that the discovery gates 10 are received in the predetermined cycle, and also, no notification indicating that the unicast frames 11 to 13 have been received was issued by the received frame detecting unit 4 within a predetermined time period since the reception of a discovery gate 10, the erroneous emission detecting unit 5 detects that there is a possibility that an abnormality may have occurred in one or more of the ONUs (including the ONU of its own) connected to mutually the same OLT 20 so that the one or more ONUs are in a continuous emission state, and the communication in the upstream direction is disabled (i.e., a continuous emission abnormal state). When the continuous emission abnormal state is detected, the erroneous emission detecting unit 5 so notifies the LED controlling unit 8 and the emission force-quit controlling unit 6.

On the contrary, if a notification indicating that the unicast frames 11 to 13 have been received was issued by the received frame detecting unit 4 within the predetermined time period since the reception of a discovery gate 10, the erroneous emission detecting unit 5 determines that the continuous emission abnormal state has been cancelled and so notifies the LED controlling unit 8 and the emission force-quit controlling unit 6.

In the present example, when the optical input detecting unit 3 notifies that the signal is received at a normal optical input level, the normality of the downstream communication is judged by judging whether the discovery gates 10 are received in the predetermined cycle, based on the notifications from the received frame detecting unit 4 indicating that the discovery gates 10 were received. In other words, the normality of the downstream communication is judged based on the conditions in both Expressions (1) and (2) above; however, the present invention is not limited to this example. Alternatively, it is acceptable to judge the normality of the downstream communication by judging whether the discovery gates 10 are received in the predetermined cycle as defined in Expression (1) above. Further, it is also acceptable to judge the normality of the downstream communication based on a notification from the optical input detecting unit 3 as defined in Expression (2) above, instead of judging whether the discovery gates 10 are received in the predetermined cycle.

The emission force-quit controlling unit 6 calculates the emission force-quit starting time according to an expression such as Expression (3) shown above, based on a unique ID such as the LLID of its own, so that the emission force-quit time periods of the ONUs do not overlap one another. When the calculated emission force-quit starting time has arrived, the emission force-quit controlling unit 6 instructs the emission force-quit unit 7 to perform the emission force-quit process, which is to stop the light emission for the predetermined emission force-quit time period. Further, if the emission force-quit controlling unit 6 receives a notification from the erroneous emission detecting unit 5 indicating that the continuous emission abnormal state is cancelled while the emission force-quit unit 7 is performing the emission force-quit process, the emission force-quit controlling unit 6 determines that the ONU of its own is the ONU that is in the continuous emission abnormal state. Further, the emission force-quit controlling unit 6 keeps instructing the emission force-quit unit 7 to continue performing the emission force-quit process even after the emission force-quit time period expires. The emission force-quit controlling unit 6 also notifies the LED controlling unit 8 that the ONU of its own is determined to be the ONU that is in the continuous emission abnormal state.

When having received the notification from the emission force-quit controlling unit 6 indicating that the ONU of its own is determined to be the ONU that is in the continuous emission abnormal state, the LED controlling unit 8 illuminates an LED to indicate that the ONU itself is an abnormal ONU.

It is desirable to provide the emission force-quit controlling unit 6 with the function to, once the ONU of its own has been determined to be the ONU that is in the continuous emission abnormal state, stop the electric power supply to the ONU, keep the emission force-quit state even after the electric power is turned on again, and keep the LED illuminated. However, this function is not essential to the present invention.

In the present embodiment, the example in which the communication method defined by the IEEE Std 802.3-2005 or the IEEE 802.3av is adopted is explained; however, the present invention is not limited to this example. It is possible to similarly apply the operation according to the present embodiment to any communication method by which predetermined signals are transmitted from the OLT 20 to the ONUs in a predetermined cycle, and each of the ONUs responds to the signals. In such a situation, instead of judging whether the discovery gates 10 are regularly received, it is judged whether the predetermined signals that are regularly transmitted are received regularly.

As explained above, according to the present embodiment, the erroneous emission detecting unit 5, the emission force-quit controlling unit 6, and the emission force-quit unit 7 are added to a general-purpose ONU defined by the IEEE Std 802.3-2005 or the IEEE 802.3av. When the discovery gates are received regularly, and also, no unicast frame has been received within the predetermined time period since the reception of a discovery gate 10, the erroneous emission detecting unit 5 determines that the continuous emission abnormal state is present. Thus, it is possible to detect continuous emission abnormalities, while keeping the circuit added to the general-purpose ONU minimum.

Further, the emission force-quit controlling unit 6 instructs that the emission force-quit process should be started in such a manner that the emission force-quit process time periods of the ONUs do not overlap one another. Accordingly, the emission force-quit unit 7 forcibly stops the light emission based on the instruction. Further, if the emission force-quit controlling unit 6 is notified by the erroneous emission detecting unit 5 that the continuous emission abnormal state is cancelled while the emission force-quit process is being performed, the emission force-quit controlling unit 6 determines that the ONU of its own is the cause of the continuous emission abnormal state and keeps the emission force-quit state. As a result, because it is possible to identify the ONU causing the continuous emission abnormality and to forcibly stop the light emission of the identified ONU, it is possible to quickly recover from the abnormal state.

Industrial Applicability

As explained above, the optical subscriber terminating device and the abnormality detecting method according to an aspect of the present invention are useful in a PON system and are suitable for, in particular, a PON system in which processes are performed with handshakes between an OLT and ONUs.

**Claims**

1. An optical subscriber terminating device that receives a predetermined control signal transmitted by an optical subscriber terminal station device in a predetermined cycle, returns a response signal in response to the predetermined control signal, and receives a unicast frame transmitted to the optical subscriber terminating device by the optical subscriber terminal station device having received the response signal, comprising:

    a received frame detecting unit that detects a type of signal received from the optical subscriber terminal station device; and
    an abnormal emission detecting unit that detects an abnormal emission state, based on a result detected by the received frame detecting unit.

2. The optical subscriber terminating device according to claim 1, wherein
    examples of the type of signal detected by the received frame detecting unit include the unicast frame, and

the abnormal emission detecting unit detects a situation in which no unicast frame is received even after a threshold time period has elapsed since a predetermined reference time, as the abnormal emission state.

3. The optical subscriber terminating device according to claim 2, wherein
the examples of the type of signal detected by the received frame detecting unit further include the predetermined control signal, and
the abnormal emission detecting unit detects a situation in which it is determined that the predetermined control signal has been received in the predetermined cycle and also that no unicast frame is received even after a predetermined time period has elapsed since a reception of the control signal, as the abnormal emission state.

4. The optical subscriber terminating device according to claim 2, further comprising: an optical input detecting unit that judges whether an input level is normal, based on whether a signal level of a signal received from the optical subscriber terminal station device is equal to or higher than a predetermined threshold level, wherein
the abnormal emission detecting unit detects a situation in which it is determined that the predetermined control signal has been received in the predetermined cycle and also that the input level is normal, as the abnormal emission state.

5. The optical subscriber terminating device according to claim 3, further comprising: an optical input detecting unit that judges whether an input level is normal, based on whether a signal level of a signal received from the optical subscriber terminal station device is equal to or higher than a predetermined threshold level, wherein
the abnormal emission detecting unit detects a situation in which it is determined that the predetermined control signal has been received in the predetermined cycle and also that the input level is normal, as the abnormal emission state.

6. The optical subscriber terminating device according to any one of claims 1 to 5, further comprising:

an emission force-quit unit that performs an emission force-quit process by which a light emission of the optical subscriber terminating device is forcibly stopped for a predetermined force-quit time period; and
a force emission controlling unit that, when the abnormal emission state is detected, determines an emission force-quit time period during which the light emission is forcibly stopped, in such a manner that the determined emission force-quit time period does not overlap with an emission force-quit time period of another optical subscriber terminating device connected to a mutually-same optical subscriber terminal station device, and controls the emission force-quit unit so that the emission force-quit process is performed during the determined time period.

7. The optical subscriber terminating device according to claim 6, wherein the emission force-quit time period is determined based on a Logical Link Identification (LLID) assigned to the optical subscriber terminating device.

8. The optical subscriber terminating device according to claim 6, wherein
while the emission force-quit process is being performed, the abnormal emission detecting unit judges whether an abnormal emission state is detected, and if no abnormal emission state is detected, the abnormal emission detecting unit notifies the force emission controlling unit that the abnormal emission state is cancelled, and
if the force emission controlling unit receives the notification indicating that the abnormal emission state is cancelled while the emission force-quit process is being performed, the force emission controlling unit identifies the optical subscriber terminating device as a device that caused the abnormal emission state and exercises control so that the emission force-quit unit continues to perform the emission force-quit process.

9. The optical subscriber terminating device according to claim 8, further comprising: a Light Emitting Diode (LED) controlling unit that illuminates an LED to indicate that an abnormality has occurred in the optical subscriber terminating device, wherein
when having received the notification indicating that the abnormal emission state is cancelled, the force emission controlling unit instructs the LED controlling unit to illuminate the LED to indicate that an abnormality has occurred in the optical subscriber terminating device.

10. The optical subscriber terminating device according to claim 7, wherein
while the emission force-quit process is being performed, the abnormal emission detecting unit judges whether an abnormal emission state is detected, and if no abnormal emission state is detected, the abnormal emission detecting unit notifies the force emission controlling unit that the abnormal emission state is cancelled, and

if the force emission controlling unit receives the notification indicating that the abnormal emission state is cancelled while the emission force-quit process is being performed, the force emission controlling unit identifies the optical subscriber terminating device as a device that caused the abnormal emission state and exercises control so that the emission force-quit unit continues to perform the emission force-quit process.

11. The optical subscriber terminating device according to claim 10, further comprising: a Light Emitting Diode (LED) controlling unit that illuminates an LED to indicate that an abnormality has occurred in the optical subscriber terminating device, wherein
when having received the notification indicating that the abnormal emission state is cancelled, the force emission controlling unit instructs the LED controlling unit to illuminate the LED to indicate that an abnormality has occurred in the optical subscriber terminating device.

12. A Passive Optical Network (PON) system that includes the optical subscriber terminal station device and a plurality of optical subscriber terminating devices and in which the optical subscriber terminal station device transmits predetermined control signals to the optical subscriber terminating devices in a predetermined cycle, each of the optical subscriber terminating devices returns a response signal in response to the predetermined control signals, and the optical subscriber terminal station device transmits a unicast frame to each of the optical subscriber terminating devices when having received the response signal, wherein
each of the optical subscriber terminating devices comprises:

a received frame detecting unit that detects a type of signal received from the optical subscriber terminal station device; and
an abnormal emission detecting unit that detects an abnormal emission state, based on a result detected by the received frame detecting unit.

13. An abnormality detecting method used by an optical subscriber terminating device that receives a predetermined control signal transmitted by an optical subscriber terminal station device in a predetermined cycle, returns a response signal in response to the predetermined control signal, and receives a unicast frame transmitted to the optical subscriber terminating device by the optical subscriber terminal station device having received the response signal, comprising:

a received frame detecting step of detecting a type of signal received from the optical subscriber terminal station device; and
an abnormal emission detecting step of detecting an abnormal emission state, based on a result detected at the received frame detecting step.

# FIG.1

ONU ⌐1

10  11  12  13
[DG] [UC] [UC] [UC]

⌐14
OPTICAL
FIBER

⌐2
OPTICAL
TRANSMIT-
TING AND
RECEIVING
UNIT

⌐4
RECEIVED
FRAME
DETECTING
UNIT

⌐3
OPTICAL
INPUT
DETECTING
UNIT

⌐5
ERRONEOUS
EMISSION
DETECTING
UNIT

⌐8
LED
CONTROLL-
ING UNIT

⌐7
EMISSION
FORCE-QUIT
UNIT

⌐6
EMISSION
FORCE-QUIT
CONTROLL-
ING UNIT

# FIG.2

⌐20
OLT

21

⌐1-1
ONU — ⌐22-1

⌐1-2
ONU — ⌐22-2

⌐1-3
ONU — ⌐22-3

⌐1-4
ONU — ⌐22-4

⌐1-5
ONU — ⌐22-5

# FIG.3

# FIG.4

FIG.5

# FIG.6-1

ONUs 1-1 TO 1-3 DETECT CONTINUOUS ABNORMAL EMISSION STATE — S61

ONU 1-1 PERFORMS EMISSION FORCE-QUIT PROCESS — S62

HAS ONUs 1-1 TO 1-3 JUDGE WHETHER CONTINUOUS ABNORMAL EMISSION STATE BEEN CANCELLED? — S63

YES → ONU 1-1 CONTINUES TO BE IN FORCE EMISSION STATE — S64

NO

HAS ONU 1-1 JUDGES WHETHER EMISSION FORCE-QUIT TIME PERIOD EXPIRED? — S67

NO

YES

ONU 1-1 DISCONTINUES EMISSION FORCE-QUIT PROCESS DUE TO EXPIRATION OF EMISSION FORCE-QUIT TIME PERIOD — S68

ONU 1-2 PERFORMS EMISSION FORCE-QUIT PROCESS — S69

A

ONU 1-1 NOTIFIES LED OF ABNORMALITY — S65

B

# FIG.6-2

(A)                                                    (B)

**S70** HAS ONUs 1-1 TO 1-3 JUDGE WHETHER CONTINUOUS ABNORMAL EMISSION STATE BEEN CANCELLED? — YES

NO ↓

**S73** HAS ONU 1-2 JUDGES WHETHER EMISSION FORCE-QUIT TIME PERIOD EXPIRED? — NO

YES ↓

**S74** ONU 1-2 DISCONTINUES EMISSION FORCE-QUIT PROCESS DUE TO EXPIRATION OF EMISSION FORCE-QUIT TIME PERIOD

**S75** ONU 1-3 PERFORMS EMISSION FORCE-QUIT PROCESS

**S71** ONU 1-2 CONTINUES TO BE IN FORCE EMISSION STATE

**S72** ONU 1-2 NOTIFIES LED OF ABNORMALITY

**S76** HAS ONUs 1-1 TO 1-3 JUDGE WHETHER CONTINUOUS ABNORMAL EMISSION STATE BEEN CANCELLED? — YES

NO ↓

**S79** HAS ONU 1-3 JUDGES WHETHER EMISSION FORCE-QUIT TIME PERIOD EXPIRED? — NO

YES ↓

**S80** ONU 1-3 DISCONTINUES EMISSION FORCE-QUIT PROCESS DUE TO EXPIRATION OF EMISSION FORCE-QUIT TIME PERIOD

**S81** PROCESS IS ENDED BECAUSE THERE IS POSSIBILITY THAT CAUSE OF ABNORMAL EMISSION STATE MAY NOT BE ONUs

**S77** ONU 1-3 CONTINUES TO BE IN FORCE EMISSION STATE

**S78** ONU 1-3 NOTIFIES LED OF ABNORMALITY

**S66** PROCESS TO IDENTIFY AND ISOLATE ONU THAT IS IN ABNORMAL EMISSION STATE IS COMPLETED

END

## INTERNATIONAL SEARCH REPORT

| | International application No. |
|---|---|
| | PCT/JP2009/001616 |

A.  CLASSIFICATION OF SUBJECT MATTER
*H04L12/44(2006.01)i*

According to International Patent Classification (IPC) or to both national classification and IPC

B.   FIELDS SEARCHED

Minimum documentation searched (classification system followed by classification symbols)
H04L12/44

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y<br>A | JP 02-119439 A  (Nissin Electric Co., Ltd.),<br>07 May, 1990 (07.05.90),<br>Page 2, lower right column, line 13 to page 4,<br>lower right column, line 3<br>(Family: none) | 1,6-13<br>2-5 |
| Y<br>A | JP 2007-194983 A  (Oki Electric Industry Co.,<br>Ltd.),<br>02 August, 2007 (02.08.07),<br>Par. Nos. [0038] to [0046]<br>(Family: none) | 1,6-13<br>2-5 |
| Y | JP 2006-174270 A  (Sumitomo Electric Industries,<br>Ltd.),<br>29 June, 2006 (29.06.06),<br>Par. Nos. [0111] to [0140]<br>(Family: none) | 6-11 |

| ☒ | Further documents are listed in the continuation of Box C. | ☐ | See patent family annex. |

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>13 May, 2009 (13.05.09) | Date of mailing of the international search report<br>26 May, 2009 (26.05.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/001616 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2007-027819 A  (Fujitsu Access Ltd.),<br>01 February, 2007 (01.02.07),<br>Par. Nos. [0034] to [0052]<br>(Family: none) | 1-13 |

Form PCT/ISA/210 (continuation of second sheet) (April 2007)

**EP 2 418 805 A1**

## REFERENCES CITED IN THE DESCRIPTION

**Patent documents cited in the description**

- JP 2007318524 A

- JP 2007158943 A